(19) Europäisches Patentamt
European Patent Office
Office européen des brevets

(11) Publication number: **0 009 936**
**B1**

(12) **EUROPEAN PATENT SPECIFICATION**

(45) Date of publication of patent specification: **23.02.83**

(51) Int. Cl.[3]: **C 08 K 5/00,** C 08 K 5/02, C 08 L 25/04, C 08 L 57/00

(21) Application number: **79302028.0**

(22) Date of filing: **28.09.79**

(54) **Fire retardant polymers and a process for producing such polymers.**

(30) Priority: **02.10.78 US 947798**

(43) Date of publication of application:
**16.04.80 Bulletin 80/8**

(45) Publication of the grant of the patent:
**23.02.83 Bulletin 83/8**

(84) Designated Contracting States:
**BE DE FR GB IT NL**

(56) References cited:
**DE - B - 1 282 938**
**FR - A - 1 119 851**
**FR - A - 2 301 556**
**GB - A - 1 179 604**
**US - A - 3 530 083**
**US - A - 3 530 090**
**US - A - 4 067 930**

(73) Proprietor: **MONSANTO COMPANY**
**Patent Department 800 North Lindbergh Boulevard**
**St. Louis, Missouri 63166 (US)**

(72) Inventor: **Sprenkle, Jr., William Edward**
**22 Bennett Road**
**Wilbraham, Massachusetts 01095 (US)**

(74) Representative: **Pearson, John Lionel et al,**
**Monsanto Europe S.A. Avenue de Tervuren 270-272 Letter Box No 1**
**B-1150 Brussels (BE)**

**EP 0 009 936 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England

# Fire retardant polymers and a process for producing such polymers

This invention relates to fire retardant polymer compositions and specifically compositions comprising a blend of additives chosen to optimize both the efficiency of the fire retardant and the physical properties of the polymer.

It is known that the incorporation of fire retardant additives tends to diminish markedly certain of the physical properties of the polymer into which it is incorporated and French Patent No. 2,301,556 and U.S. Patent No. 4,067,930 describe certain prior flame-retardant polymer compositions. A particularly serious problem arises with the multi-axial impact strength of the polymer which can be very adversely affected by the presence of additives. The effect is documented for example in the book *"Toughened Plastics"* by C. B. Bucknall (Applied Science, London, 1977).

It has now been found that a correlation exists between the extent to which the additive becomes solubilized in the polymer and the retention of the physical properties of the polymer. This correlation is illustrated in Example 1 below.

This discovery was made possible by the application of thermal optical analysis to determine the extent to which an additive is solubilized in the polymer. The technique, which is described in the book *"Macromolecules in Solution"* by H. Morawetz (Wiley, New York, 1975), utilizes equipment comprising a hot stage microscope, a photo voltmeter and a duPont 990 read-out instrument. In practice, a beam of monochromatic light is passed through a sample of a polymer incorporating the additive. The fraction of the light transmitted by the sample is monitored against temperature. Typically the transmission will start off at a low value and substantially maintain that value as the temperature rises until a point at which the light transmission begins to climb sharply to a much higher level which is maintained thereafter. The point at which the sharp rise begins is the solubilization temperature, Ts, of the additive in the polymer. The effect is illustrated in the graph of percent light transmission against temperature that appears as Figure 1 which is more fully described in Example 1 below. Note that upon cooling the percent light transmission does not fall substantially indicating that virtually all the additive remains dissolved. Complete solubilization is not immediately reached at Ts but over a period the length of which depends on the amount by which Ts is exceeded. Ts marks the lowest temperature at which solubilization can be achieved. Ts is dependent on the polymer, the additive and the amount of additive used. Certain additives in certain polymers show the above effect but upon cooling, the light transmission falls indicating increasing re-separation. For the purposes of this specification such an effect is not regarded as "solubilization" which is herein used to indicate a stable state not affected by subsequent temperature variations.

Clearly the effect on physical properties is not a major factor where very small amounts of additive are used. Thus additives such as anti-static additives, UV stabilizers and antioxidants which are usually employed in amounts of up to one percent are not those where solubilization is a critical factor in property retention.

Additionally certain additives can never be solubilized in organic polymers because of their inorganic character. These include antimony oxide fire-retardant synergists, smoke suppressants such as calcium oxide, dawsonite, borates and the like, fillers and pigments such as titanium dioxide, calcium carbonate and carbon black, and mineral reinforcing additives such as glass fibers, talc and the like.

This technique of solubilization is therefore of use only with compatible organic additives incorporated into thermoplastic polymers in significant amounts, i.e., about 5 percent or more based on the polymer weight. In practice this means fire retardants since other organic additives that fit this description such as plasticizers are specifically chosen for their ability to modify certain physical properties. However, for some organic fire-retardant additives in combination with some polymers it proves impossible or impracticable to incorporate an effective amount in the polymer with complete solubilization. This can be because the solubilization temperature of that amount of the additive in the polymer is above the decomposition temperature of either the additive or the polymer or because the time taken to achieve complete solubilization at the practicable processing temperatures is impracticably long. This has the effect of eliminating a range of potentially useful additives because of the property penalty involved in their use.

The present invention provides a way in which these formerly disfavored additives can be used without having to accept a property penalty.

The invention provides a means of incorporating organic fire-retardant additives into thermoplastic polymers with maximum retention of the physical properties of the polymer while requiring a reduced time under processing conditions before solubilization is achieved.

The invention described herein flows from the surprising discovery that the solubilization temperature of a given amount of a fire-retardant additive in a polymer can be reduced substantially if it is added along with a compatible organic additive having a substantially lower solubilization temperature. In effect the combination of additives has a "combined solubilization temperature" that lies somewhere intermediate the solubilization temperatures of the individual additives. This means that fire-retardant additives that are difficult to use efficiently with a given polymer because the solubilization temperature of the amount required to give a V = 0 rating in the UL—94 flammability test is too high, can be combined with other additives with lower solubilization temperatures in the same

polymer to give a composition that can be processed readily at temperatures at which both additives rapidly become completely solubilized.

This invention therefore provides fire-retardant polymer compositions that suffer from little or no diminution of their physical properties as a result of the presence of the fire-retardant additives.

It further provides a means of selecting additive combinations that will have a minimal effect on the physical properties, particularly the multi-axial impact strength, of the polymer into which they are incorporated.

The term "fire retardant additive" as it is used in this specification is understood to relate to halogen-containing, monomeric or oligomeric organic compounds which have the property of releasing halogen when they decompose. It is thus not intended that the term cover metal-containing fire-retardant synergists such as zinc oxide and antimony oxide and the like. Likewise, additives whose primary purpose is to reduce the evolution of smoke or noxious gases from burning polymers are not regarded as fire retardants for the purposes of this invention.

BRIEF DESCRIPTION OF THE INVENTION

The invention disclosed herein comprises a polymeric composition comprising a thermoplastic polymer and, dissolved therein with complete solubilization, an additive combination comprising:

(A) a fire-retardant additive which is a halogen-containing monomeric or oligomeric organic compound which releases halogen upon decomposition: and

(B) at least one compatible organic additive which can be completely solubilised in the polymer;

wherein

(i) Additive (A) is present in an amount such that the solubilization temperature of (A) alone in the thermoplastic polymer is Ts; and

(ii) Additive (B) and the amount thereof are selected such that its solubilization temperature in the same polymer is less than Ts and the combined solubilization temperature of (A) and (B) in the polymer is at least 10°C. below Ts.

The invention also comprises a process for the production of a fire-retardant polymeric composition which comprises incorporating into a thermoplastic polymer an additive composition comprising:

(A) a fire-retardant additive; and

(B) at least one compatible organic additive;

wherein

(i) Additive (A) is present in an amount such that the solubilization temperature of (A) alone in the polymer is Ts; and

(ii) Additive (B) and the amount thereof are selected such that its solubilization temperature in the same polymer is less than Ts and the combined solubilization temperature of (A) and (B) in the polymer is at least 10°C. below Ts,

said incorporation being performed at a temperature above the combined solubilization temperature of those amounts of additives (A) and (B) present in the polymer. Preferably the amounts of additives (A) and (B) are such that the polymer composition has a V = 0 rating in the UL—94 test.

The term "compatible organic additive" as used herein is intended to include those additives that can be completely solubilized in the polymer. In practice since the function of such an additive is, in combination with the fire-retardant additive (A) to give a combined solubilization temperature at least 10°C. below Ts, it needs to be one that can be added in comparable quantities. As indicated above such additives are usually, but not by any means exclusively, fire-retardants or perhaps plasticizers.

Where (B) is one or more flame retardants it will be appreciated that a wide range of combinations of (A) and (B) can be devised, all of which will give the polymeric composition a V=0 rating but will, because of the varying proportions, have combined solubilization temperatures that are less than Ts by varying amounts. The optimum formulation for use at the preferred processing conditions can be selected such that the preferred V=0 rating is obtained.

DETAILED DESCRIPTION OF THE INVENTION

*The Thermoplastic Polymer*

The polymer that is rendered fire-retardant by the process herein described can be any thermoplastic polymer that has a tendency to burn when exposed to flame. Such polymers include styrenic polymers such as polystyrene, rubber-modified polystyrene (HIPS), copolymers of styrene or a substituted styrene with any one or more of an unsaturated nitrile, an acrylate ester, a methacrylate ester, an unsaturated anhydride, a diene such as butadiene as well as rubber-modified versions of such copolymers including ABS; polyamides such as nylon 66, and nylon 6; polyolefins such as polyethylene and polypropylene; copolymers of olefins with unsaturated esters and alcohols; and polyesters such as polyethylene terephthalate, polybutylene terephthalate, polymethyl methacrylate and polyvinyl acetate.

Typical commercial processing temperature ranges for some of the above polymers are given in Table 1 below.

TABLE 1

| POLYMER | PROCESSING TEMPERATURE MIN. | PROCESSING TEMPERATURE MAX. |
|---|---|---|
| HIPS | 110 | 280 |
| ABS | 120 | 260 |
| Styrene/Maleic Anhydride | 120 | 266 |
| Polypropylene | 177 | 260 |

*Fire Retardant Additive*

A very wide range of halogen-containing organic fire-retardants are available commercially. Most are based on halogen-substituted aromatic compounds and it is in precisely this group that high solubilization temperatures are encountered.

In Table 2 below are listed several commercial flame retardants that will be used in the illustration of this invention along with their source (where a chemical name cannot be given) and decomposition temperature.

TABLE 2

| Flame Retardant | Supplier | Decomposition Temperature |
|---|---|---|
| 1) Dechlorane* +25 (halogenated hydrocarbon) | Hooker Chem. & Plast. Corp. | >300°C. |
| 2) Decabromodiphenylether (DBDPO) | | >300°C. |
| 3) Firemaster* 695 (FM695) bis(pentabromophenoxy)ethane) | Velsicol Corporation | >300°C. |
| 4) Dechlorane* 602 (halogenated hydrocarbon) | Hooker Chem. & Plast. Corp. | 280°C. |
| 5) Tetrabromobisphenol S (TBBS) | | 270°C. |
| 6) Firemaster* 680 (FM680) bis(tribromophenoxy)ethane | Velsicol Corporation | 290°C. |
| 7) Tetrabromobisphenol A-dimethyl ether [$(MeO)_2$ TBBA] | | 295°C. |
| 8) Tetrabromobisphenol A-diacetate [$(Ac)_2$ TBBA] | | 295°C. |
| 9) Tetrabromoxylene (TBX) | | 270°C |
| 10) Pentabromoethylbenzene (PBEB) | | 250°C. |
| 11) Chlorowax* 70S (Halogenated paraffin hydrocarbon) | Diamond Shamrock Chem. Co. | 250°C. |
| 12) Citex* BC—26 (halogenated octadiene-cyclopentadiene adduct) | Cities Service Co. | 260°C. |

* indicates trade name of the listed supplier

*Dechlorane +25* is identified by CAS Registry No. 13560—89—9 and its formula is 1, 2, 3, 4, 7, 8, 9, 10, 13, 13, 14, 14, -dodecachloro -1, 4, 4a, 5, 6, 6a, 7, 10, 10a, 11, 12, 12a -dodecahydro -1,4:7,10-dimethanodibenzo (a,e,) cyclooctene.

The formula is as follows:

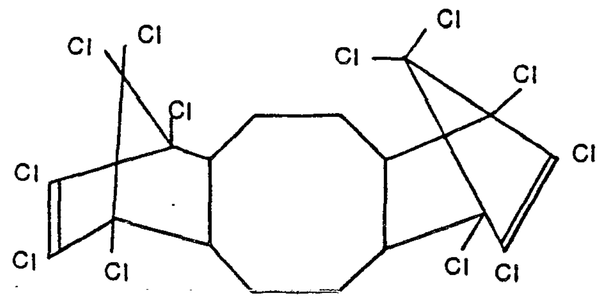

$C_{18}H_{12}Cl_{12}$

*Dechlorane 602* is a different adduct of the basic Dechlorane +25 molecule the exact structure of which is not known.

*Citex BC—26* has the formula

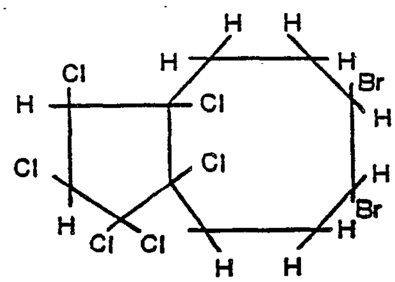

The solubilization temperature of the additive in thermoplastic polymers, as has been indicated above, varies somewhat with the concentration. In addition there is often a limit on the amount that can actually be solubilized which, it should be recalled, implies that the additive stays substantially completely in solution even when the temperature drops below the solubilization temperature (Ts).

As an indication of the variation of Ts with concentration, the fire-retardants listed in Table 2 were added to HIPS in varying concentrations and the Ts for each was determined. The results are presented in Table 3 below.

As can be seen from a comparison of Tables 1 and 3 the fire-retardant additives that are most difficult to incorporate into HIPS in effective amounts without operating at close to or above the top end of the commercial processing temperature range are Dechlorane +25 and decabromodiphenyl ether. These additives are also highly effective additives and Dechlorane +25 is useful in conferring a degree of U.V. stability as well as fire-retardance. Additive combinations according to the invention including either of these additives are therefore particularly preferred.

Similar considerations lead to the selection of combinations of additives which include decabromodiphenyl ether as the preferred fire-retardant additive for other styrenic polymers and, for polypropylene, the preferred use of decabromodiphenyl ether and Dechlorane +25 as the fire-retardant additive component.

Preferred compatible organic additives can readily be determined from a consideration of the extensive data presented in the Examples.

TABLE 3
Variation of Ts with additive concentration in HIPS

| Additive | | Concentration (Wt %) | Ts(°C.) |
|---|---|---|---|
| 1) | (Dech. +25) | 20 | (Doubtful |
| | | 15 | solubilization) |
| | | 10 | 306 |
| | | 5 | 281 |
| 2) | (DBDPO) | 20 | 273 |
| | | 15 | 263 |
| | | 10 | 255 |
| | | 5 | 249 |
| 3) | (FM 695) | 10 | (Not solubilized) |
| | | 5 | 269 |
| 4) | (Dechl. 602) | 20 | 251 |
| | | 10 | 228 |
| 5) | (TBBS) | 10 | 268 (Additive degrades) |
| | | 5 | 252 |
| 6) | (FM 680) | 10 | 255 |
| 7) | [$(MeO_2TBBA$] | 20 | (Doubtful solubilization) |
| | | 10 | 200 |
| 8) | [$(Ac)_2TBBA$] | 20 | (Not solubilized) |
| | | 10 | 198 |
| 9) | (TBX) | 16 | 164 |
| | | 14 | 153 |
| | | 10 | 132 |
| 10) | (PBEB) | 20 | < 200 |
| | | 10 | < 150 |
| 11) | (Chlor.70S) | 10 | 160 |
| 12) | (Citex BC—26) | 15 | 242 |
| | | 10 | 197 |

* See Table 2 for complete additive identification.

A comparison of the processing temperatures for the various polymers shown in Table 1 with the Ts values given in Table 3 will indicate clearly the kinds of composition in which solubilization problems might be expected if a single fire-retardant additive is used. In general the invention has greatest utility where the fire-retardant additive, when present in amounts effective to give a polymer composition with a V = 0 rating in the UL—94 test, has a solubilization temperature close to the upper limit of the polymer's processing temperature range. The above comparison shows that for the polymers described, the invention has greatest utility where the fire-retardant additives are those identified as 1, 2, 3 and 5 in Table 2.

The amount of fire-retardant additive that is preferably present in the composition of the invention is that required to produce a V = 0 rating in the UL—94 test dated September 17, 1973. This test is carried out on test specimens 15.24 cm. x 1.27 cm. x 0.254 cm. Any flammability ratings reported in this specification based on this test are not intended to reflect hazards presented by the compositions under test under actual fire conditions.

*The Compatible Organic Additive*

As indicated above the compatible organic additive is one that is effective when used in the appropriate amount, in reducing the solubilization temperature of the fire-retardant additive in the thermoplastic polymer by at least 10°C. It is very frequently advantageous to reduce the amount of the

fire-retardant additive and provide that the compatible organic additive is itself also a fire-retardant, though one with a somewhat lower solubilization temperature in the polymer, so as to maintain the level of fire-retardance of the overall composition.

Alternatively but rather less desirably, the compatible organic additive can be a different type of additive such as a plasticizer. Generally plasticizers are not preferred since they tend to have a rather more modest effect on the combined solubilization temperature than fire-retardants. Examples of suitable plasticizers include esters of acids such as phthalic, benzoic, adipic, and higher fatty acids with aliphatic alcohols, or polyhydroxylic hydrocarbons, such as glycol or glycerol.

The amount of the compatible organic additive to be added can be determined experimentally but when mixtures of fire-retardants are used it may be desirable to tailor the weights of each additive so as to give a V = 0 rating. To provide a guide in this matter it is found useful to employ the concept of "fire-retardant efficiency" in which each additive is rated against a standard. The manner of using this concept to determine appropriate amounts of fire-retardant additives to give a V = 0 rating for any specific polymer is described below.

As a matter of convenience it has been decided to use DBDPO as the standard fire-retardant against which the other fire-retardants are to be assessed in determining their efficiency.

The efficiency is determined by dividing the halogen content of the number of grams of DBDPO required to give a fixed number of grams of HIPS a V = 0 rating by the amount of halogen in the number of grams of the additive to be evaluated that give the same V = 0 rating with the same polymer.

This results in a chart as shown in Table 4.

TABLE 4
Fire Retardant Efficiencies

| Fire Retardant (with 4 phr of $Sb_2O_3$) | | Parts To give V = 0 (phr)* | Parts Halogen Supplied | | Efficiency*** |
|---|---|---|---|---|---|
| | | | Br | Cl** | |
| 2) | (DBDPO) | 10.5 | 8.7 | — | 1.00 |
| 1 | (Dechl +25) | 18.0 | — | 11.7 | .743 |
| 3 | (FM 695) | 11.0 | 9.0 | — | 0.955 |
| 4 | (Dechl 602) | 18 | — | 12.5 | 0.696 |
| 6 | (FM 680) | 16 | 10.6 | 0.37 | 0.794 |
| 7 | [$(MEO)_2$TBBA) | 16.5 | 9.2 | — | 0.945 |
| 8 | [$(Ac)_2$TBBA) | 22.0 | 11.2 | — | 0.776 |
| 12 | (BC—26) | 16.0 | 5.0 | 6.55 | 0.753 |
| Carbonate oligomer of tetrabromo bisphenol | | 14.0 | 7.9 | — | 1.10 |

* using a 0.254 cm. thickness sample

** No. of parts of halogen contained in the parts of additive needed to give V = 0

*** Calculate by $\dfrac{\text{"Parts Halogen Supplied" for DBDPO}}{\text{"Parts Halogen Supplied" for Additive}}$

e.g. efficiency of Additive 1 is $\dfrac{8.7}{11.7} = .743.$

The information on this chart can then be used to calculate what fire-retardant combinations will result in a V = 0 rating for a HIPS composition incorporating such a combination.

As an example, if it were decided to combine DBDPO (5 phr) with the dimethyl ether of

tetrabromo bisphenol A [$(MeO)_2$TBBA] in a V = 0 HIPS formulation, the amount of $(MeO)_2$ TBBA required can be calculated as follows:

V = 0 HIPS require 10.5 phr of DBDPO
Proportion of halogen in DBDPO is 83%

So that effective halogen supplied is 83% of 10.5 phr = 8.7 phr
If only 5% DBDPO is used effective halogen supplied is

$$5 \times .83 \times 1.00 = 4.15 \text{ phr}$$

Thus, the co-additive must make up (8.7—4.15) phr or 4.55 phr of effective halogen supplied.

$(MeO)_2$TBBA is 61% bromine with efficiency 0.945

Thus, the amount of $(MeO)_2$TBBA required is

$$\frac{4.55}{0.61 \times 0.945} = 7.9 \text{ phr}$$

Thus to obtain a V = 0 HIPS composition using 5 phr of DBDPO it is necessary to add a further 7.9 phr of $(MeO)_2$TBBA.

Similar calculations can be used to derive appropriate fire-retardant combinations for other polymer systems.

DESCRIPTION OF THE DRAWINGS

Figure 1. is a graph of percentage light transmission against temperature for a composition comprising a high impact polystyrene and 10% of decabromodiphenyl ether. Figure 2. is a graph of multiaxial impact strength against percentage of additive solubilized using the same combination as formed the base for Figure 1. Figure 3. is a graph showing a family of curves obtained by plotting fractional additive solubilization against residence time at four different temperatures.

DESCRIPTION OF THE PREFERRED EMBODIMENTS

Example 1

A high impact polystyrene with a rubber level between 7.5 and 9.5% and a weight average molecular weight between 160,000 and 250,000 was used as the base thermoplastic polymer in the following experiments which are designed to explain the pheonomenon of solubilization more clearly and to illustrate the dependence of multiaxial impact strength on the degree to which solubilization has occurred.

A composition comprising the above HIPS base polymer and 10% by weight of DBDPO blended together at a temperature below the Ts and samples were microtomed to about .5 mm thickness. The sample was then placed in the thermal optical analysis equipment described above and a beam of monochromatic light was passed through the sample. The fraction of light transmitted by the sample is monitored as the temperature of the sample is raised at a rate of 20°C. per minute.

The light transmission readings were plotted against temperature and the graph appearing as Figure 1 was obtained. As can be seen, the transmission stays at a uniform low level for a period before beginning a sharp rise (at the solubilization temperature, Ts) until a point is reached at which the trace levels out. The maximum level is the complete, 100%, solubilization point and the uniform low level before the sharp rise is taken as 0% solubilization. A calibration of the light transmission is therefore obtained which permits correlation of the light transmission with degree of solubilization.

If a sample is heated to a point intermediate between 0% solubilization and 100% solubilization and then quenched, it will retain that intermediate degree of solubilization and this is the basis for the data presented in Figure 2 which shows a graph of the fraction of the multiaxial impact strength retained against the percent solubilization of the additive in the polymer. The samples used were identical to those used to obtain the graph presented in Figure 1.

The same technique can be used to follow the rate at which solubilization occurs as a function of temperature. In this adaptation the sample is maintained at a constant temperature above the solubilization temperature and the light transmission (and hence the fraction of complete solubilization) is monitored.

The graph presented as Figure 3 shows a family of curves obtained using the same polymer/additive system described above for which the solubilization temperature is 255°C. As can readily be seen, the rate at which complete solubilization occurs depends on the degree to which the

solubilization temperature is exceeded. This is clearly a significant factor since, if Ts can be reduced, processing at the same temperature will achieve more rapid solubilization thus reducing the length of time the composition is exposed to potentially degrading conditions.

The data presented in Figures 1, 2 and 3 show clearly that solubilization for any specific additive/polymer system takes place, (if at all), at a specific temperature and that achievement of complete solubilization is essential if the multiaxial impact strength of the polymer into which the additive is incorporated is to be maintained. It also shows that solubilization is achieved quicker the higher the temperature is above Ts.

## Example 2

This Example illustrates the invention described herein in terms of combinations of two fire retardants added to the HIPS polymer used in Example 1. The solubilization temperatures were measured in the manner described in Example 1.

Samples were prepared containing the blends of fire retardant additives set forth below in Table 5. Additive A (the fire retardant additive) is Dechlorane +25 and Additive B (the compatible organic additive — in this case also a fire-retardant additive) is Dechlorane 602. The solubilization temperature for the compositions were then determined using the technique described in Example 1. The results are set forth in Table 5 below.

TABLE 5

| Composition | Additive A (% by wt. of Composition) | Additive B (% by wt. of Composition) | Combined solubilization temp. |
|---|---|---|---|
| 1 | 7 | 0 | 292°C. |
| 2 | 7 | 7 | 278°C. |
| 3 | 7 | 11 | 268°C. |

From this data it can clearly be seen that the presence of Additive B substantially reduces the solubilization temperature by comparison with that for Additive A alone.

## Example 3

In this Example the combination of additives and the polymer described in Example 2 were again used. This time however V=0 fire-retardant compositions were formulated using different combinations of the additives and a fixed amount of $Sb_2O_3$ and these polymeric compositions were then processed under identical conditions to obtain molded samples which were then subjected to the falling dart impact test described in ASTM Test D—3029. The results obtained are set forth in Table 6.

TABLE 6

| Formulation | Composition 1 | 2 | 3 | 4 |
|---|---|---|---|---|
| Antimony Oxide | 4.3 | 4.3 | 4.3 | 4.3 |
| Additive A | 18 | 14.4 | 10.8 | 9.0 |
| Additive B | — | 3.6 | 7.2 | 9.0 |
| Processing Temperature | 282°C. | 282°C. | 282°C. | 282°C. |
| Falling Dart Impact (J) (Samples molded at 266°C.) | 9.5 | 18.0 | 23.3 | 26.8 |

The above results clearly show that, while maintaining the fire retardance level, partial replacement of Additive A with Additive B results in a great improvement of the impact strength.

The Ts obtained using the thermal optical analysis technique cannot be used directly to predict a precise processing temperature since it is obtained using a static system rather than a dynamic agitated system such as exists in an extruder for example. The effect of such agitation is to reduce the effective solubilization temperature by an amount that depends on the intensity of the mixing.

Thus for composition 4 in Table 6 it is clear from the improvement in impact strength that the processing temperature is somewhere above the temperature at which solubilization can occur. This is

so even though Ts measured using the static thermal optical analysis technique is some 24°C. higher.

Example 4

This Examples sets forth solubilization temperatures for various combinations of fire-retardants in (in the role of compatible organic additives) with Dechlorane +25. In each case the additives were blended with the HIPS used in Example 1. The results are set forth in Table 7. The fire-retardant Additive is Dechlorane +25 and the compatible organic Additive is a fire-retardant identified by the number accorded in Table 2 above.

| Fire Retardant Additive | Compatible Organic Additive | | Comb. Solub. Temp. °C. |
|---|---|---|---|
| Amount (phr) | Additive | Amount (phr) | |
| 10.0 | — | 0 | 306 |
| 5.0 | — | 0 | 282 |
| 0.0 | 3 | 10.0 | 280 |
| 5.0 | 3 | 5.0 | 258 |
| 0.0 | 4 | 10.0 | 227 |
| 5.0 | 4 | 5.0 | 247 |
| 7.5 | 4 | 2.5 | 283 |
| 7.0 | 4 | 11.0 | 268 |
| 8.0 | 4 | 10.0 | 291 |
| 9.0 | 4 | 9.0 | 306 |
| 0.0 | 7 | 10.0 | 200 |
| 5.0 | 7 | 5.0 | 257 |
| 7.5 | 7 | 2.5 | 285 |
| 12.0 | 7 | 6.0 | 322 |
| 0.0 | 8 | 10.0 | 198 |
| 5.0 | 8 | 5.0 | 257 |
| 7.5 | 8 | 2.5 | 278 |
| 5.0 | 9 | 11.0 | 264 |
| 10.0 | 9 | 5.0 | 296 |
| 0.0 | 10 | 10.0 | <150 |
| 5.0 | 10 | 5.0 | 254 |
| 0.0 | 12 | 10.0 | 197 |
| 3.0 | 12 | 7.0 | 224 |
| 5.0 | 12 | 5.0 | 260 |

The above results clearly show that by appropriate selection of the compatible organic additive, the temperature at which both additives can become completely solublized may be greatly reduced.

Example 5

This Example is constructed in the same way as Example 4 except that different compounds were selected as fire-retardant additive. The reporting of the results obtained is otherwise identical and appears as Table 8.

TABLE 8
Ts For Mixtures Of Additives In HIPS

| Fire Retardant Additive | | Compatible Organic Additive | | Combined Solub. Temp. -°C. |
|---|---|---|---|---|
| Additive | Amount (phr) | Additive | Amount (phr) | |
| 2 | 5 | — | 0 | 249 |
| 2 | 10 | — | 0 | 255 |
| 2 | 5 | 5 | 7.5 | 231 |
| 2 | 5 | 9 | 10.0 | 230 |
| 2 | 10 | 12 | 5.0 | 244 |
| 2 | 10 | Dioctyl Phthalate | 2.0 | 244 |
| 3 | 5 | — | 0 | 270 |
| 3 | 10 | — | 0 | 280 |
| 3 | 5 | 4 | 5 | 236 |
| 3 | 0 | 4 | 10 | 227 |
| 3 | 5 | 4 | 10 | 249 |
| 3 | 5 | 7 | 10 | 250 |
| 3 | 5 | 8 | 5 | 235 |
| 3 | 0 | 8 | 10 | 198 |
| 3 | 5 | 10 | 10 | 252 |
| 3 | 0 | 10 | 10 | >150 |

From the above results it can readily be appreciated that the phenomenon described is not limited to those formulations in which Dechlorane +25 is the fire-retardant Additive.

Example 6

This Example presents in Table 9 (below) data similar to that in Examples 4 and 5 with the difference that the thermoplastic polymer is a commercial ABS polymer. Otherwise the presentation of the data follows the pattern of Examples 4 and 5.

TABLE 9
Ts For Mixtures Of Additives In ABS

| Fire Retardant Additive | | Compatible Organic Additive | | Combined Solub. Temp. °C. |
|---|---|---|---|---|
| Additive | Amount (phr) | Additive | Amount (phr) | |
| 1 | 5 | — | — | 282 |
| 1 | 5 | 4 | 10 | 236 |
| 2 | 7.5 | — | — | 252 |
| 2 | 12.5 | — | — | 258 |
| 2 | 7.5 | 7 | 15 | 204 |
| 2 | 12.5 | 7 | 10 | 193 |
| 2 | 12.5 | 8 | 10 | 236 |
| 2 | 7.5 | 12 | 15 | 198 |
| 3 | 7.5 | — | — | 276 |
| 3 | 7.5 | 7 | 15 | 257 |
| 3 | 7.5 | 10 | 15 | 256 |
| 6 | 12.5 | — | — | 215 |
| 6 | 12.5 | 7 | 10 | 208 |

Example 7

This Example presents in Table 10 (below) similar to that in Examples 4 to 6 with the difference that the thermoplastic polymer used is a rubber-modified styrene/maleic anhydride copolymer containing about 8% maleic anhydride. Otherwise the presentation of the data follows the pattern of the above Examples 4 to 6.

TABLE 10
Ts For Mixtures of Additives in RM/SMA Copolymers

| Fire Retardant Additive | | Compatible Organic Additive | | Combined Solub. Temp. °C. |
|---|---|---|---|---|
| Additive | Amount (phr) | Additive | Amount (phr) | |
| 1 | 5 | — | — | 281 |
| 1 | 10 | — | — | 306 |
| 1 | 10 | 4 | 5 | 243 |
| 1 | 10 | 7 | 5 | 241 |
| 1 | 5 | 7 | 10 | 233 |
| 1 | 10 | 9 | 5 | 235 |
| 1 | 5 | 9 | 10 | 230 |
| 2 | 5 | — | — | 249 |
| 2 | 10 | — | — | 255 |
| 2 | 5 | 7 | 10 | 208 |
| 2 | 5 | 8 | 10 | 215 |
| 2 | 10 | 8 | 5 | 230 |
| 2 | 10 | 9 | 5 | 214 |
| 2 | 5 | 9 | 10 | 215 |
| 3 | 5 | — | — | 270 |
| 3 | 10 | — | — | 283 |
| 3 | 10 | 4 | 5 | 230 |
| 3 | 10 | 7 | 5 | 220 |
| 3 | 5 | 9 | 10 | 220 |

Example 8

This Example presents in Table 11 (below) data similar to that in Examples 4 to 7 with the difference that the thermoplastic polymer is a commercial polypropylene. Otherwise the presentation of the data follows the pattern in Examples 4 to 7.

TABLE 11
Ts For Mixtures Of Additives In Polypropylene

| Fire Retardant Additive | | Compatible Organic Additive | | Combined Solub. Temp. °C. |
|---|---|---|---|---|
| Additive | Amount (phr) | Additive | Amount (phr) | |
| 1 | 5 | — | — | 285 |
| 1 | 5 | 7 | 15 | 190 |
| 1 | 5 | 8 | 15 | 234 |
| 1 | 5 | 9 | 15 | 214 |
| 2 | 10 | — | — | 255 |
| 2 | 15 | — | — | 263 |
| 2 | 10 | 7 | 15 | 165 |
| 2 | 15 | 7 | 10 | 216 |
| 2 | 15 | 9 | 10 | 238 |

The foregoing Examples clearly show that the phenomenon of reduction of solubilization temperature is not observed only with HIPS or even just with styrenic polymers. Moreover, though its primary utility is in the blends of fire-retardants certain plasticizers can also provide usable compatible organic additives.

It is emphasized that not all fire-retardant additives can be solubilized in any given thermoplastic polymer. As indicated above some come out of solution on cooling and some never reach solubilization because of decomposition of the polymer or the additive or because of a more fundamental incompatibility. In general however the effective ranges of addition of the fire-retardant additive combinations are as set forth in Table 12 below.

TABLE 12
Effective Ranges Of Fire-Retardant Additive Combinations

| | Fire Retardant Additive | | Compatible Organic Additive Amount (%) | | | | | | | | |
|---|---|---|---|---|---|---|---|---|---|---|---|
| | Identity | (1) Amount (%) | 4 | 5 | 6 | 7 | 8 | 9 | 10 | 11 | 12 |
| HIPS | 1 | 1—10 | 1—15 | 1—10 | 1—10 | 1—15 | 1—15 | 1—15 | 1—15 | 1—10 | 1—15 |
| | 2 | 1—12 | 1—12 | — | 1—10 | 1—12 | 1—12 | 1—15 | 1—15 | 1—10 | 1—15 |
| | 3 | 1—5 | — | — | — | 5—12 | — | 5—12 | 5—12 | 5—12 | — |
| | 5 | 1—10 | 1—10 | >< | 1—10 | 1—15 | 1—15 | 1—15 | 1—15 | 1—10 | 1—10 |
| ABS | 1 | 1—7 | 1—15 | — | 1—15 | — | — | — | 1—15 | 1—10 | — |
| | 2 | 1—20 | 1—15 | — | 1—15 | 1—15 | 1—15 | 1—10 | 1—15 | 1—10 | 1—10 |
| | 5 | 1—12 | — | — | 1—10 | 1—15 | 1—15 | 1—10 | 1—15 | 1—10 | — |
| | 6 | 10—15 | — | — | >< | — | — | 1—15 | 1—15 | 1—10 | — |
| SMA | 1 | 1—10 | 1—10 | 1—6 | 1—8 | 1—10 | 1—10 | 1—10 | 1—10 | 1—10 | 1—10 |
| | 2 | 1—10 | 1—10 | — | 1—10 | 1—10 | 1—10 | 1—10 | 1—10 | 1—10 | 1—10 |
| | 3 | 1—10 | 1—10 | — | 1—8 | 1—10 | 1—10 | 1—10 | 1—10 | 1—10 | 1—8 |
| | 5 | 1—10 | 1—10 | >< | 1—10 | 1—10 | 1—10 | 1—10 | 1—10 | 1—10 | 1—10 |
| PR | 1 | 1—10 | 1—15 | — | 1—10 | 1—15 | 1—15 | 1—15 | 1—15 | 1—10 | 1—13 |
| | 2 | 1—15 | 1—15 | — | 1—10 | 1—15 | 1—15 | 1—15 | 1—15 | 1—10 | 1—13 |
| | 6 | 1—15 | — | — | >< | 1—15 | 1—15 | — | — | — | 1—15 |

(1)The upper end of the range applies even if more than one Compatible Organic Additive is used to produce the fire retardant combination.
A space in the chart indicates an unsuitable combination.

Outside the ranges of composition given substantial difficulties are encountered in achieving complete solubilization of the additives in the polymer.

**Claims**

1. A polymeric composition having a thermoplastic polymer and, dissolved therein with complete solubilization, an additive combination characterized by:

A. a fire-retardant additive which is a halogen-containing monomeric or oligomeric organic compound which releases halogen upon decomposition; and

B. at least one compatible organic additive which can be completely solubilised in the polymer; wherein

(i) additive A is present in an amount such that the solubilization temperature of A alone in the thermoplastic polymer is Ts; and

(ii) additive B and the amount thereof are selected such that its solubilization temperature in the polymer is less than Ts and the combined solubilization temperature of A and B in the polymer is at least 10°C. below Ts.

2. A composition of Claim 1 characterized in which the amounts of the additives are selected to give a polymeric composition with a V = 0 rating in the UL—94 test.

3. A composition of Claim 1 characterized in which the compatible organic additive is a fire-retardant.

4. A composition of Claim 1 characterized in which the thermoplastic polymer is a styrenic polymer or a polyolefin.

5. A composition of Claim 1 characterized in which said fire-retardant additive is an halogenated dimethanodibenzocyclooctene adduct, decabromodiphenylether or bis(pentabromophenoxy)ethane.

6. A polymeric composition according to Claim 1 comprising a styrenic polymer and dissolved therein with complete solubilization an additive combination characterized by:

A. a fire-retardant additive of decabromodiphenyl ether or an halogenated dimethanodibenzocyclooctene adduct; and

B. at least one compatible organic additive; wherein

(i) additive A is present in an amount such that the solubilization temperature of A alone in the thermoplastic polymer is Ts; and

(ii) additive B and the amount thereof are selected such that its solubilization temperature in the polymer is less than Ts and the combined solubilization temperature of A and B in the polymer is at least 10°C. below Ts.

7. A polymeric composition of Claim 6 characterized wherein said styrenic polymer is a rubber-modified polystyrene.

8. A polymeric composition of Claim 7 characterized by comprising:

A. from 1 to 12% by weight of decabromodiphenylether as the fire-retardant additive, and

B. in an amount not to exceed the indicated percentage of the total composition weight, a compatible organic additive an halogenated methanobenzocyclooctene adduct from 1 to 12% by weight; the dimethyl ether of tetrabromobisphenol A, from 1 to 12% by weight; the diacetate of tetrabromobisphenol A, from 1 to 12% by weight, pentabromoethylbenzene, from 1 to 15% by weight, tetrabromoxylene, from 1 to 15% by weight; an halogenated paraffin hydrocarbon with a decomposition temperature of about 250°C., from 1 to 10% by weight; bis(tribromophenoxy)-ethane, from 1 to 10% by weight; or an halogenated octadienecyclopentadiene adduct, from 1 to 15% by weight.

9. A polymeric composition of Claim 6 characterized in which said styrenic polymer is ABS.

10. A polymeric composition of Claim 6 characterized in which said styrenic polymer is a rubber-modified copolymer of styrene and maleic anhydride.

11. A polymeric composition according to Claim 1 comprising polypropylene, and dissolved therein with complete solubilization characterized by an additive combination comprising

A. from 1 to 15% by weight of the composition of decabromodiphenyl ether; and

B. in an amount not to exceed the indicated percentage of the total composition weight, a compatible organic additive an halogenated methanobenzocyclooctene adduct, from 1 to 15% by weight; the dimethylether of tetrabromobisphenol A, from 1 to 15% by weight; the diacetate of tetrabromobisphenol A, from 1 to 15% by weight; pentabromoethylbenzene, from 1 to 15% by weight; tetrabromoxylene, from 1 to 15% by weight; an halogenated paraffin hydrocarbon with a decomposition temperature of about 250°C., from 1 to 10% by weight, an halogenated octadiene-cyclopentadiene adduct, from 1 to 13% by weight; or bis(tribromophenoxy)ethane, from 1 to 10% by weight; wherein

(i) additive A is present in an amount such that the solubilization temperature of A alone in the thermoplastic polymer is Ts; and

(ii) additive B and the amount thereof are selected such that the combined solubilization temperature of A and B in the polymer is at least 10°C. below Ts.

12. A composition of Claim 8 characterized in which the amounts of the additives are selected

such that the composition achieves a V = O rating in the UL—94 test.

13. A process for the production of a polymeric composition according to Claim 1 which comprises incorporating into a thermoplastic polymer an additive combination comprising:

A. a fire-retardant additive; and

B. at least one compatible organic additive;

wherein

(i) additive A is present in an amount such that the solubilization temperature of A alone in the polymer is Ts; and

(ii) additive B and the amount thereof are such that the combined solubilization temperature of A and B in the polymer is at least 10°C below Ts characterized in that

such incorporation is performed at a temperature above the combined solubilization temperature of those amounts of additives A and B present in the polymer.

14. A process according to Claim 13 characterized in which said additives are incorporated in the polymer in an extrusion operation.

15. A process according to Claim 13 characterized in which said polymer is a styrenic polymer or a polyolefin.

16. A process according to Claim 13 characterized in which said fire-retardant additive is decabromodiphenylether or an halogenated dimethano-dibenzocyclooctene adduct.

17. A process according to Claim 13 characterized in which said compatible organic additive is itself a fire-retardant additive of an halogenated methanobenzocyclooctene adduct, bis-(tribromophenoxy)ethane, the dimethylether of tetrabromobisphenol A, the diacetate of tetrabromobisphenol A, tetrabromoxylene, pentabromoethylbenzene, an halogenated octadiene-cyclopentadiene adduct or an halogenated paraffin hydrocarbon with a decomposition temperature of about 250°C.

**Patentansprüche**

1. Polymermasse aus einem thermoplastischen Polymer und einer darin unter vollständiger Solubilisierung gelösten Additivkombination, gekennzeichnet durch:

A. ein feuerhemmendes Additiv, welches eine halogenhaltige monomere oder oligomere organische Verbindung ist, die bei der Zersetzung Halogen freisetzt; und

B. mindestens ein verträgliches organisches Additiv, welches vollständig in dem Polymer solubilisiert werden kann, worin

(i) das Additiv A in einer solchen Menge vorhanden ist, daß die Solubilisierungstemperatur von A allein in dem thermoplastischen Polymer Ts beträgt; und

(ii) das Additiv B und dessen Menge derart ausgewählt sind, daß seine Solubilisierungstemperatur in dem Polymer niedriger als Ts liegt und die kombinierte Solubilisierungstemperatur von A und B in dem Polymer mindestens 10°C unterhalb Ts liegt.

2. Masse nach Anspruch 1, dadurch gekennzeichnet, daß die Mengen der Additive derart ausgewählt sind, daß sich eine Polymerzubereitung mit einer Bewertung von V = 0 in dem UL—94—Test ergibt.

3. Masse nach Anspruch 1, dadurch gekennzeichnet, daß das verträgliche organische Additiv ein feuerhemmendes Mittel ist.

4. Masse nach Anspruch 1, dadurch gekennzeichnet, daß das thermoplastische Polymer ein Styrolpolymer oder ein Polyolefin ist.

5. Masse nach Anspruch 1, dadurch gekennzeichnet, daß das feuerhemmende Additiv ein halogeniertes Dimethanodibenzocyclooctenaddukt, Decabromdiphenylether oder Bis(pentabromphenoxy)ethan ist.

6. Polymermasse nach Anspruch 1, enthaltend ein Styrolpolymer und eine darin unter vollständiger Solubilisierung gelösten Additivkombination, gekennzeichnet durch:

A. Decabromdiphenylether oder ein halogeniertes Dimethanodibenzocyclooctenaddukt als feuerhemmendes Additiv und

B. mindestens ein verträgliches organisches Additiv, wobei

(i) das Additiv A in einer solchen Menge vorhanden ist, daß die Solubilisierungstemperatur von A allein in dem thermoplastischen Polymer Ts beträgt; und

(ii) das Additiv B und seine Menge derart ausgewählt sind, daß seine Solubilisierungstemperatur in dem Polymer niedriger liegt als Ts und die kombinierete Solubilisierungstemperatur von A und B in dem Polymer mindestens 10°C unterhalb Ts liegt.

7. Polymermasse nach Anspruch 6, dadurch gekennzeichnet, daß das Styrolpolymer ein kautschukmodifiziertes Polystyrol ist.

8. Polymermasse nach Anspruch 7, gekennzeichnet durch den Gehalt an

A. 1 bis 12 Gew.-% Decabromdiphenylether als feuerhemmendes Additiv und

B. in einer Menge, die den angegebenen Prozentsatz des Gesamtgewichts der Masse nicht übersteigt, als verträgliches organisches Additiv einer halogenierten Methanobenzocyclooctenaddukts in einer Menge von 1 bis 12 Gew.-%; des Dimethylethers von Tetrabrombisphenol A in einer Menge von 1 bis 12 Gew.-%; des Diacetats von Tetrabrombisphenol A in einer Menge von 1

bis 12 Gew.-%; Pentabromethylbenzol in einer Menge von 1 bis 15 Gew.-%; Tetrabromxylol in einer Menge von 1 bis 15 Gew.-%; eines halogenierten Paraffinkohlenwasserstoffs in einer Zersetzungstemperatur von etwa 250°C in einer Menge von 1 bis 10 Gew.-%; Bis(tribromphenoxy)ethan in einer Menge von 1 bis 10 Gew.-%; oder eines halogenierten Octadiencyclopentadienaddukts in einer Menge von 1 bis 15 Gew.-%.

9. Polymermasse nach Anspruch 6, dadurch gekennzeichnet, daß das Styrolpolymer ABS ist.

10. Polymermasse nach Anspruch 6, dadurch gekennzeichnet, daß das Styrolpolymer ein kautschukmodifiziertes Copolymer aus Styrol und Maleinsäureanhydrid ist.

11. Polymermasse nach Anspruch 1, enthaltend Polypropylen und eine darin unter vollständiger Solubilisierung gelöste Additivkombination, gekennzeichnet durch

A. 1 bis 15 Gew.-% Decabromdiphenylether, bezogen auf die Masse; und

B. in einer Menge, die den angegebenen Prozentsatz des Gesamtgewichts der Masse nicht übersteigt, als verträgliches organisches Additiv ein halogeniertes Methanobenzocyclooctenaddukt in einer Menge von 1 bis 15 Gew.-%; den Dimethylether von Tetrabrombisphenol A in einer Menge von 1 bis 15 Gew.-%; das Diacetat von Tetrabrombisphenol A in einer Menge von 1 bis 15 Gew.-%; Pentabromethylbenzol in einer Menge von 1 bis 15 Gew.-%; Tetrabromxylol in einer Menge von 1 bis 15 Gew.-%; einen halogenierten paraffinkohlenwasserstoff mit einer Zersetzungstemperatur von etwa 250°C in einer Menge von 1 bis 10 Gew.-%; ein halogeniertes Octadien-Cyclopentadien-Addukt in einer Menge von 1 bis 13 Gew.-%; oder Bis(tribromphenoxy)ethan in einer Menge von 1 bis 10 Gew.-%; worin

(i) das Additiv A in einer solchen Menge vorhanden ist, daß die Solubilisierungstemperatur von A allein in dem thermoplastischen Polymer Ts beträgt; und

(ii) das Additiv B und dessen Menge derart ausgewählt sind, daß die kombinierte Solubilisierungstemperatur von A und B in dem Polymer mindestens 10°C unterhalb Ts liegt.

12. Masse nach Anspruch 8, dadurch gekennzeichnet, daß die Mengen der Additive derart ausgewählt sind, daß die Masse bei dem UL—94—Test eine V = 0-Bewertung aufweist.

13. Verfahren zur Herstellung einer Polymermasse nach Anspruch 1, welches darin besteht, in ein thermoplastisches Polymer eine Additivkombination einzuarbeiten, welche:

A. Ein feuerhemmendes Additiv; und

B. mindestens ein verträgliches organisches Additiv umfaßst, wobei

(i) das Additiv A in einer solchen Menge vorhanden ist, daß die Solubilisierungstemperatur von A allein in dem Polymer Ts beträgt; und

(ii) das Additiv B und dessen Menge so sind, daß die kombinierte Solubilisierungstemperatur von A und B in dem Polymer mindestens 10°C unterhalb Ts liegt,

dadurch gekennzeichnet, daß das Einarbeiten bei einer Temperatur durchgeführt wird, die oberhalb der kombinierten Solubilisierungstemperatur der Mengen der in dem Polymer vorhandenen Additive A und B liegt.

14. Verfahren nach Anspruch 13, dadurch gekennzeichnet, daß die Additive durch eine Extrusionsbehandlung in das Polymer eingearbeitet werden.

15. Verfahren nach Anspruch 13, dadurch gekennzeichnet, daß das Polymer ein Styrolpolymer oder ein Polyolefin ist.

16. Verfahren nach Anspruch 13, dadurch gekennzeichnet, daß das feuerhemmende Additiv Decabromdiphenylether oder ein halogeniertes Dimethanodibenzocyclooctenaddukt ist.

17. Verfahren nach Anspruch 13, dadurch gekennzeichnet, daß das verträgliche organische Additiv selbst ein feuerhemmendes Additiv, ein halogeniertes Methanobenzocyclooctenaddukt, Bis(tribromphenoxy)ethan, der Dimethylether von Tetrabrombisphenol A, das Diacetat von Tetrabrombisphenol A, Tetrabromxylol, Pentabromethylbenzol, ein halogeniertes Octadien-Cyclopentadien-Addukt oder ein halogenierter Paraffinkohlenwasserstoff mit einer Zersetzungstemperatur von etwa 250°C ist.

**Revendications**

1. Composition polymère ayant un polymère thermoplastique, et dissoute dedans avec solubilisation complète, une combinaison d'additifs, caractérisée par:

A. un additif de retardement d'inflammation qui est un composé organique monomère ou oligomère, contenant un halogène, qui libère l'halogène lors de la décomposition; et

B. au moins un additif organique compatible qui peut être complètement solubilisé dans le polymère; où

(i) l'additif A est présent en quantité telle que la températur de solubilisation de A seul dans le polymère thermoplastique est Ts; et

(ii) l'additif B et sa quantité sont choisis de manière telle que sa température de solubilisation dans le polymère soit inférieure à Ts et que la température de solubilisation combinée de A et de B dans le polymère soit au moins 10°C en-dessous de Ts.

2. Composition selon la revendication 1, caractérisée en ce que les quantités des additifs sont choisies pour donner une composition polymère à évaluation V = 0 dans le test UL—94.

3. Composition selon la revendication 1, caractérisée en ce que l'additif organique compatible est un produit de retardement d'inflammation.

4. Composition selon la revendication 1, caractérisé en ce que le polymère thermoplastique est un polymère styrénique ou une polyoléfine.

5. Composition selon la revendication 1, caractérisée en ce que l'additif de retardement d'inflammation est un produit d'addition de diméthanodibenzocyclooctène halogéné, l'éther de décabromodiphényle ou du bis(pentabromophénoxy)éthane.

6. Composition polymère selon la revendication 1, comprenant un polymère styrénique et, dissoute dedans avec solubilisation complète, une combinaison d'additifs, caractérisée par:

A. un additif de retardement d'inflammation constitué d'éther de décabromodiphényle ou d'un produit d'addition de diméthanodibenzocyclooctène halogéné, et

B. au moins un additif organique compatible, où

(i) l'additif A est présent en quantité telle que la température de solubilisation de A seul dans le polymère thermoplastique est Ts; et

(ii) l'additif B et sa quantité sont choisis de manière telle que la température de solubilisation dans le polymère soit inférieure à Ts et que la température de solubilisation combinée de A et de B dans le polymère soit au moins 10°C en-dessous de Ts.

7. Composition polymère selon la revendication 6, caractérisée en ce que le polymère styrénique est un polystyrène modifié par du caoutchouc.

8. Composition polymère selon la revendication 7, caractérisée en ce qu'elle comprend:

A. 1 à 12% en poids d'éther de décabromodiphényle comme additif de retardement d'inflammation; et

B. en quantité pour ne pas dépasser le pourcentage indiqué du poids total de la composition, un additif organique compatible constitué par un produit d'addition halogéné de méthanobenzocyclooctène, en quantité de 1 à 12% en poids; l'éther diméthylique de tétrabromobisphénol A, de 1 à 12% en poids; le diacétate de tétrabromobisphénol A, de 1 à 12% en poids; le pentabromoéthylbenzène, de 1 à 15% en poids; le tétrabromoxylène, de 1 à 14% en poids; un hydrocarbure paraffinique halogéné, à température de décomposition d'environ 250°C, de 1 à 10% en poids, du bis(tribromophénoxy)-éthane, de 1 à 10% en poids; ou un produit d'addition d'octadiène-cyclopentadiène halogéné, de 1 à 15% en poids.

9. Composition polymère selon la revendication 6, caractérisée en ce que le polymère styrénique est l'ABS.

10. Composition polymère selon la revendication 6, caractérisée en ce que le polymère styrénique est un copolymère de styrène et d'anhydride maléique modifié par du caoutchouc.

11. Composition polymère selon la revendication 1, caractérisée en ce qu'elle comprend du polypropylène, et, dissoute dedans avec solubilisation complète, une combinaison d'additifs comprenant:

A. 1 à 15% en poids, par rapport à la composition, d'éther de décabromodiphényle; et

B. en quantité pour ne pas dépasser le pourcentage indiqué du poids total de la composition, un additif organique compatible constitué par un produit d'addition de méthanobenzocyclooctène halogéné, de 1 à 15% en poids; l'éther diméthylique de tétrabromobisphénol A, de 1 à 15% en poids, le diacétate de tétrabromobisphénol A, de 1 à 15% en poids, le diacétate de tétrabromobisphénol A, de 1 à 15% en poids; du pentabromoéthylbenzène, de 1 à 15% en poids; du tétrabromoxylène, de 1 à 15% en poids, un hydrocarbure paraffinique halogéné, à température de décomposition d'environ 250°C, de 1 à 10% en poids; un produit d'addition d'octadiène-cyclopentadiène halogéné, de 1 à 13% en poids; ou du bis(tribromophénoxy)éthane, de 1 à 10% en poids; où

(i) l'additif A est présent en quantité telle que la température de solubilisation de A seul dans le polymère thermoplastique est Ts; et

(ii) l'additif B et sa quantité sont choisis de manière telle que la température de solubilisation combinée de A et de B dans le polymère soit au moins 10°C en-dessous de Ts.

12. Composition selon la revendication 8, caractérisée en ce que les quantités des additifs sont choisies de manière telle que la composition obtient une évaluation V = 0 dans le test UL—94.

13. Procédé pour la production d'une composition polymère selon la revendication 1, qui consiste à incorporer dans un polymère thermoplastique une combinaison d'additifs comprenant:

A. un additif de retardement d'inflammation; et

B. au moins un additif organique compatible où

(i) l'additif A est présent en quantité telle que la température de solubilisation de A seul dans le polymère est Ts; et

(ii) l'additif B et sa quantité sont tels que la température de solubilisation combinée de A et de B dans le polymère soit au moins 10°C en-dessous de Ts, caractérisé en ce que cette incorporation est réalisée à une température au-dessus de la température de solubilisation combinée de ces quantités d'additifs A et B présents dans le polymère.

14. Procédé selon la revendication 13, caractérisé en ce que les additifs sont incorporés dans le

polymère dans une opération d'extrusion.

15. Procédé selon la revendication 13, caractérisé en ce que le polymère est un polymère styrénique ou une polyoléfine.

16. Procédé selon la revendication 13, caractérisé en ce que l'additif de retardement d'inflammation est l'éther de décabromodiphényle ou un produit d'addition de diméthanodibenzocyclooctène halogéné.

17. Procédé selon la revendication 13, caractérisé en ce que l'additif organique compatible est lui-même un additif de retardement d'inflammation, constitué d'un produit d'addition de méthanobenzocyclooctène halogéné, de bis(tribromophénoxy-éthane, d'éther diméthylique de tétrabromobisphénol A, de diacétate de tétrabromobisphénol A, de tétrabromoxylène, de pentabromoéthylbenzène, d'un produit d'addition octadiène-cyclopentadiène halogéné ou d'un hydrocarbure paraffinique halogéné, à température de décomposition d'environ 250°C.

Fig 1.

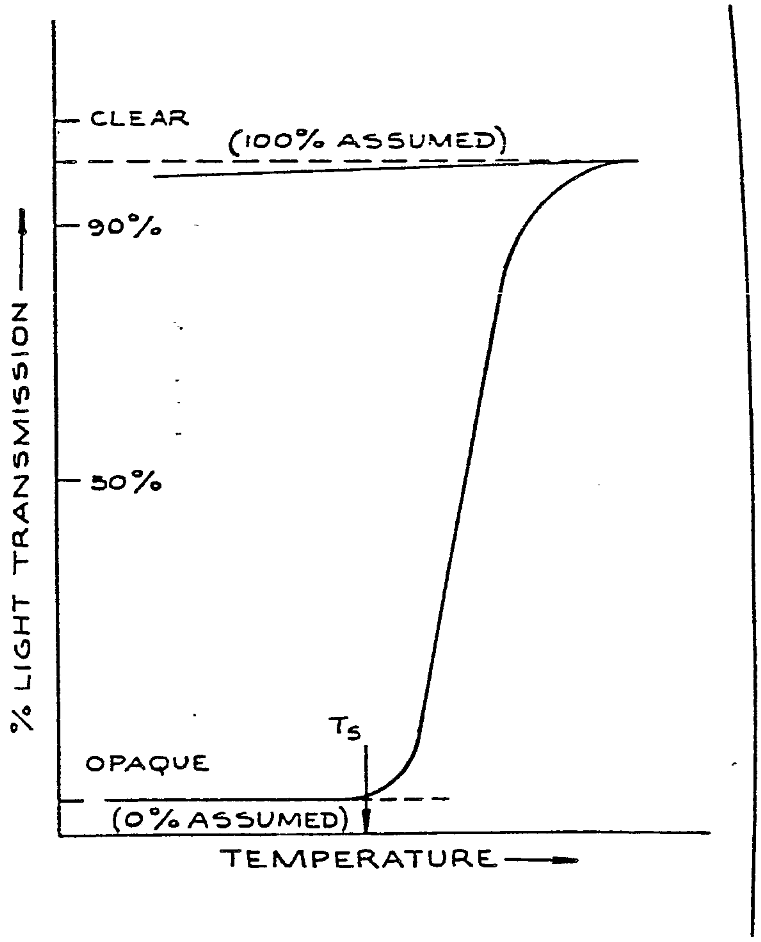
CLEAR
(100% ASSUMED)
90%
50%
% LIGHT TRANSMISSION
$T_S$
OPAQUE
(0% ASSUMED)
TEMPERATURE

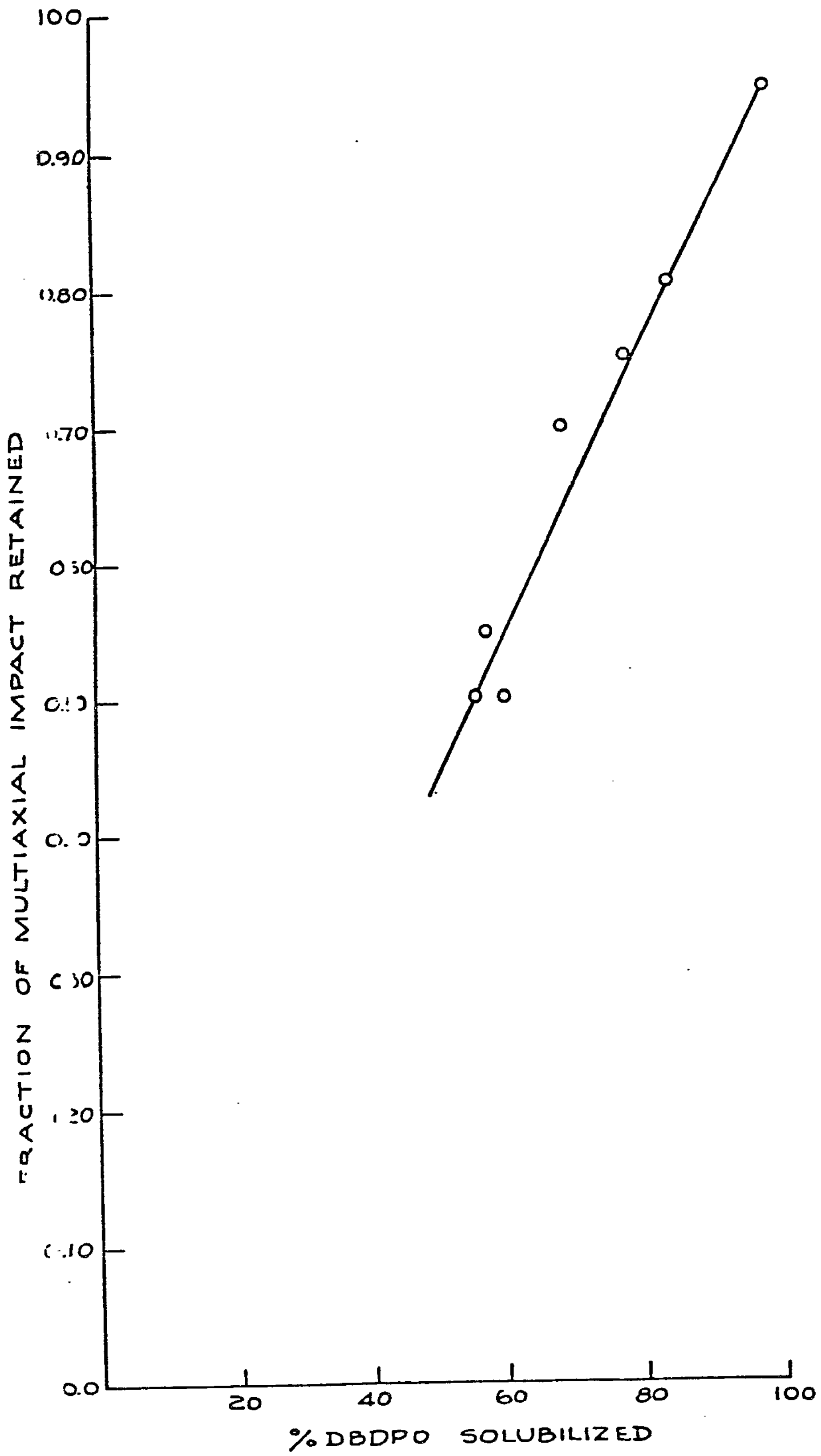

100
0.90
0.80
0.70
0.0
20
40
60
80
100
% DBDPO SOLUBILIZED
FRACTION OF MULTIAXIAL IMPACT RETAINED


FIG. 2

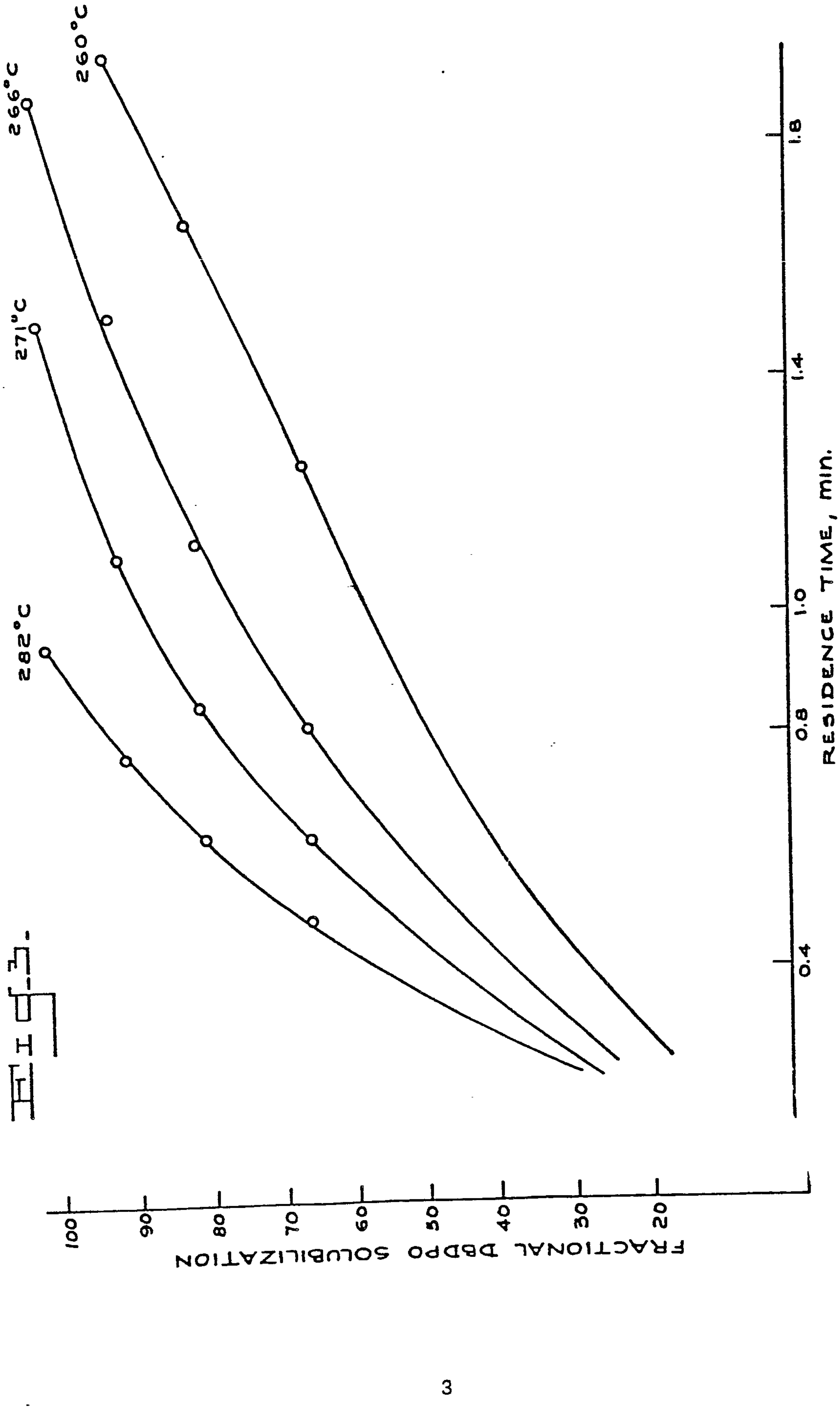

FIG. 3
260°C
266°C
271°C
282°C
0.4
0.8
1.0
1.4
1.8
RESIDENCE TIME, min.
100
90
80
70
60
50
40
30
20
FRACTIONAL DBDPO SOLUBILIZATION